# EUROPEAN PATENT APPLICATION

(11) **EP 4 611 486 A1**
(43) Date of publication of application: **03.09.2025**
(21) Application number: 24160726.6
(22) Date of filing: 29.02.2024
(51) Int. Cl.: H05B 45/12, H05B 45/44, H05B 47/18

(54) **AUTOMOTIVE LUMINOUS DEVICE**

(71) Applicant: Valeo Vision, 93012 Bobigny Cedex (FR)
(72) Inventor: GOURDON, Matheo, Bobigny (FR); MIMOUN, Mickael, Bobigny (FR); PIQUARD, Geoffrey, Bobigny (FR); BEDDAR, Sidahmed, Bobigny (FR); EL-IDRISSI, Hafid, Bobigny (FR); RENAUD, Pierre, Bobigny (FR)
(74) Representative: Valeo Visibility

(57) **Abstract**

The invention relates to a luminous device (10) for an automotive vehicle, comprising first, and second light sources configured to perform a first, respectively a second luminous function; a high frequency driver element (4) configured to produce a modulation control signal modulated according to a predetermined data sequence, a distribution element (5), configured to electrically connect the high frequency driver and light sources selected between either the first and second light sources, based on a signal received in a switch control input; the high frequency driver being configured to power selected light sources with the modulation control signal such that the selected light sources emit light pulses corresponding to the data sequence; an optical element (9) to project the light outside the luminous device; and a reception module comprising a reception optical unit, a plurality of acquisition units and a demodulation unit.

## Description

### TECHNICAL FIELD

This invention belongs to the field of automotive luminous devices and the usage of light sources for different lighting and signalling functions.

### STATE OF THE ART

It is known, in the automotive field, to use a pulsed light beam emitted by a luminous device of a motor vehicle lighting system to perform a given photometric function.

Conventionally, the light source used to emit this light beam is controlled by a pulse width modulated (PWM) electrical signal. The light source is periodically activated and de-activated by this PWM signal, so that the light beam emitted is made up of successive light pulses with a frequency high enough for the human eye to no longer distinguish flickering. The intensity of the light beam emitted is a function of the duty cycle of this PWM signal, so that it is possible to control it by adjusting this duty cycle and thus to perform a photometric function.

In addition to performing one or more photometric functions, such as a daytime running light or dipped beam type lighting, various functions can be implemented by this type of luminous device . For example, the light source of the luminous module can be controlled so that the pulses of the emitted light beam carry a sequence of data. The light system can also be equipped with a reception module to receive the emitted light beam, after reflection from an object in the vicinity of the vehicle. A computing unit in the motor vehicle can then, after detecting the data sequence in the received light beam, determine the time of flight of the emitted light beam and thus evaluate the distance separating the vehicle from the object.

In this way, the light beam can retain its original function, namely to perform a photometric function, while enabling the light system to implement a telemetry function, which may be particularly advantageous for example for driving assistance functions or in the context of autonomous or semi-autonomous driving.

However, this type of system based on the use of a transmission module capable of both performing a photometric light function and data transmission has its drawbacks. When this function is performed by more than one lighting or signalling functions, more than one high frequency driver is needed, and the cost of the device and the problems associated to high frequency signals are increased. Hence, a solution for this problem is sought.

### DESCRIPTION OF THE INVENTION

The present invention provides a solution for these problems by means of a luminous device for an automotive vehicle, the luminous device comprising
- a first group of light sources (1), comprising at least one light source, the first group of light sources being configured to contribute to a first luminous function;
- a second group of light sources (2), comprising at least one light source, the second group of light sources being configured to contribute to a second luminous function;
- a high frequency driver element (4) configured to produce a modulation control signal modulated according to a predetermined data sequence, ;
- a distribution element (5), configured to enable electric connection between the high frequency driver and a group of light source selected among the groups of light sources, wherein the distribution element has a switch control input and is configured to change the electric connection between the groups of light sources as a function of the signal received in the switch control input;
- a control unit comprising a function selection input and a first output, the control unit being configured to emit a light group selection signal on the first output according to a signal received on function selection input, the first output being connected to the switch control input of the switch element, such that the distribution element (5) selects the light group according to a signal received on the function selection input,
- the high frequency driver being configured to power the light sources of the selected group of light sources with the modulation control signal such that the selected groups of light sources emit a train of light pulses corresponding to the data sequence, at least one of the light pulses being shorter than 1µs, preferably shorter than 100ns,
- a projection optical element (9) configured to receive the light emitted by the groups of light sources and project the light outside the luminous device; and
- a reception module, the reception module comprising a reception optical unit, a plurality of acquisition units and a demodulation unit.

The high frequency driver element drives the power supply to the light sources. The high frequency driver comprises a calculation unit and a modulation unit. In a first step, the calculation unit periodically generates a predetermined data sequence, for example, a pseudo-random binary sequence composed of "0" and "1", with a 50% duty cycle. The duty cycle of the data sequence may be defined by the ratio between the number of high values and the total length of the data sequence. In a second step, the modulation unit modulates the first light beam emitted by the first group of light sources of the luminous device using the predetermined data sequence by controlling the power supply to the first group of light sources. In other words, the first light beam thus emitted under the control of the modulated signal consists of a train of light pulses. The pulses follow one another at a frequency so high that the human eye can no longer distinguish them. Furthermore, the amplitude, width and/or position of each pulse with respect to the period enables the first light beam to transport the data sequence to the reception module. In particular embodiments, the high frequency driver modulates the signal in amplitude at a data rate higher than 1 MB/s, preferably higher than 10 MB/s, or even greater. When the light sources are powered with such a control signal, they emit a train of light pulses, at least one of the light pulses being shorter than 1µs, preferably shorter than 100ns. This corresponds to a frequency of transmission greater than 1 MHz, preferably greater than 10MHz, of the bits of a binary signal transported by the light beam.

The distribution element is an active or passive electronic element which receives a signal that provides information about which of the groups of light sources should be selected. The distribution element connects the output of the driver element to the selected group, so that only the selected group receives the control signal from the high frequency driver, so that the light source is able to emit a corresponding train of light pulses.

With this invention, there is no need to provide a high frequency driver for each function, but the same driver may be used for a plurality of functions, thus saving costs and reducing the problems derived by these high frequency drivers such as bulk, heat and potential cooling solutions, routing of electronic tracks and electromagnetic interference. Further, all the light sources can be close to the driver, thus reducing power losses and electromagnetic interference.

In some particular embodiments, the distribution element is a switch, comprising a transistor, such as a Metal Oxide Semiconductor Field Effect Transistor or a Bipolar Junction Transistor. Alternatively, the switch is a GaN-based Field Effect Transistor.

A transistor is a cheap and simple element which may perform a switch between two groups.

In some particular embodiments, the distribution element is a multiplexer.

A multiplexer is an electronic circuit which receives an input control signal and a plurality of inlet channels. Depending on the input control signal, only one of the inlet channels is connected to the output. This way, the control signal may provide the multiplexer with the information necessary to select one of the groups of light sources so that the selected group is the one that receives the encoded signal from the high frequency driver.

In some particular embodiments, the optical element is a light guide or a reflector.

An optical element is an element that has some optical properties to receive a light beam and emit it in a certain direction and/or shape, as a person skilled in automotive lighting would construe without any additional burden. Reflectors, collimators, light guides, projection lenses, etc., or the combination thereof are some examples of these optical elements which are useful for transforming the light beams emitted by the light source into an acceptable light pattern for the functionality chosen for the lighting device.

In some particular embodiments, the luminous device further comprises a third group of light sources, comprising at least one light source, the third group of light sources being configured to perform a third luminous function.

The invention does not impose a limit for the number of groups of light sources, since it could be carried out with a high number of them. The limit is more related to the number of different luminous functions that could be found in the automotive luminous device.

In a preferred embodiment, the light sources are electroluminescent light sources. In particular, it is preferred that the light sources are incoherent light sources, which emit temporally and spatially incoherent light. Incoherent light sources are cheaper than coherent light sources for a same light flux, are safer to the eye, which allows for safer, cheaper and simpler automotive luminous devices, and have typically lambertian emission patterns, which is advantageous for performing motor vehicles signalling functions. In a preferred embodiment, the light sources are inorganic light emitting diodes, or LEDs, emitting incoherent light, as opposed to laser emitting diodes such as VCSELs emitting coherent light.

In some particular embodiments, the light sources are light emitting diodes. These diode assemblies provide sufficient luminous intensity to ensure the performance of the luminous functions and offer an advantageous power to consumption ratio. These diode arrays also make it possible to create light signatures specific to each make of vehicle and are seen as future means of communication between vehicles or with road infrastructures, using optical communication technology such as VLC (Visible Light Communication).

In some particular embodiments, at least one of the light sources comprises an electroluminescent element with a dimension smaller than 300 micrometres.

The size of the electroluminescent element of a light-emitting diode is understood here as the maximum dimension of the electroluminescent element of this diode. The light-emitting elements of conventional light-emitting diodes used for lighting in a vehicle are in the form of square plates, generally of the order of a millimetre square. For example, a conventional light-emitting diode has a rectangular light-emitting element with a side length of one millimetre and a width of 0.6 mm, so its size is one millimetre. Of course, in order to maintain the same lighting power, the optical system will comprise more diodes than in other cases.

By using reduced-size light-emitting diodes, the capacitive component intrinsic to the diode is reduced, this component being proportional to the volume and therefore the surface area of the diode. As the cut-off frequency of a diode is inversely proportional to this component, the diodes used in the invention have a cut-off frequency that is at least ten times the cut-off frequency of standard diodes. As a result, the signals emitted by these smaller diodes have less distortion, and make it possible to envisage applications other than lighting and inter-vehicle or vehicle-infrastructure communication, these other applications possibly including an obstacle detection application. In addition, as these smaller diodes have a smaller current flowing through them, the invention makes it possible to reduce Joule effect losses and to use smaller, and therefore less expensive, copper tracks. An advantageous feature of the optical system according to the invention is that the plurality of light sources comprises light-emitting diodes smaller than 50 micrometres. This makes it possible to further increase the cut-off frequency of the diodes, up to approximately 2 GHz. In practice, LEDs are less efficient at higher frequencies, generating additional heat and requiring more LEDs for a given light flux. Thus, a control signal modulated at a data rate inferior to 100Mb/s is preferred, as it allows for a good balance between light emission efficiency and data rate. Such a data rate corresponds to a train of light pulses, wherein none of the light pulses encoding a bit of the data sequence is shorter than 10ns.

In some particular cases, a portion of the light sources, for instance 50% of the light sources, comprise an electroluminescent element with a dimension smaller than 300 micrometres, or even an electroluminescent element with a dimension smaller than 50 micrometres. In some particular cases, the 80% of the light sources comprise an electroluminescent element with a dimension smaller than 300 micrometres, or even an electroluminescent element with a dimension smaller than 50 micrometres. In some particular cases, the 90% of the light sources comprise an electroluminescent element with a dimension smaller than 300 micrometres, or even an electroluminescent element with a dimension smaller than 50 micrometres. In some particular cases, all the light sources comprise an electroluminescent element with a dimension smaller than 300 micrometres, or even an electroluminescent element with a dimension smaller than 50 micrometres.

In some particular embodiments, each acquisition unit comprises a photodetector and the reception optical unit comprises a common optical bandpass filter arranged in front the photodetector, so that, for each of the photodetectors of the reception unit, the reflected light enters the photodetector after passing through the optical bandpass filter; such an arrangement simplifies the optical design of the system and its manufacturing process. A bandpass filter is known for sensibly blocking light with wavelengths outside a given wavelength band. The common bandpass filter may comprise a single filter, or a plurality of distinct filters elements, each blocking parts of the spectrum, such that a bandpass filter is obtained.

In some particular embodiments, all the light sources are mounted on a main electronic support; for instance the LEDs are soldered on the support.

This support may be a substrate which may comprise printed circuits, the substrate being otherwise called printed circuit board (PCB). In some particular embodiments, the electronic substrate is a rigid electronic substrate. A rigid substrate should be understood in the sense of what the skilled person would construe. A skilled person knows the difference between a rigid substrate and a flexible substrate. Although every material is "flexible" in the sense that it has a stress-strain curve, a substrate which does not deform by its own weight when held by one of its ends is deemed to be rigid, while a substrate which suffer a substantial deformation when held by one of its ends is considered to be flexible. In any case, board manufacturers offer a "flexible" model and a "rigid" model, while any skilled person knows the difference between them.

In some particular embodiments, the luminous functions are mutually exclusive.

Automotive regulations establish conditions so that some luminous functions are mutually exclusive, ie they cannot be performed at the same time. This is, for example, the case of Daytime Running Light and front Position Light, or Daytime Running Light and Direction Indicator Light. This invention suits perfectly with these functions, since the distribution element chooses to feed only one of the light groups.

In some particular embodiments, the switch control input is connected to a bus communication interface, such as Local Interconnect Network or Controller Area Network or Clock Extension Peripheral Interface.

According to an embodiment, the high frequency driver comprises an adjustment input and the control unit comprises a second output, the control unit being configured to emit an adjustment signal on its second output according to the function selection input, the adjustment input being connected to the second output the control unit, wherein the high frequency driver is configured to modify the power supplied to the LEDs, according to the adjustment signal received on the adjustment input, while powering them with the modulation signal

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows a luminous device according to the invention installed in an automotive vehicle.
Figure 2 shows an electronic arrangement contained in this luminous device.

In this document, the following reference numbers have been used:
- 1: First group of LEDs
- 2: Second group of LEDs
- 3: Third group of LEDs
- 4: HF Driver
- 5: Distribution element
- 6: Switch control input
- 7: Bus communication interface
- 8: Reception unit
- 9: Light guide
- 10: Headlamp
- 11: Calculation unit
- 12: Modulation unit
- 13: Optical unit
- 14: Elementary acquisition unit
- 15: Demodulation unit
- 100: Automotive vehicle

### DETAILED DESCRIPTION OF THE INVENTION

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

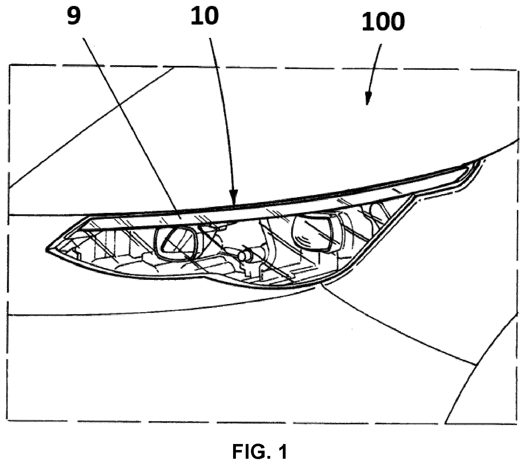

Figure 1 shows a luminous device 10 according to the invention installed in an automotive vehicle 100.

This luminous device 10 is a headlamp, and is configured to provide the usual functions, i.a., Daytime Running Light (DRL), front Position Light and Turn Indicator Light.

These functions are provided by light sources contained in the luminous device. The light emitted by these light sources is received by a light guide 9 and projected outside the headlamp 10.

Hence, the arrangement of the light sources and the light guide 9 would form an emission module. This emission module provides a luminous functions, as well as the emission of the train of light pulses. The headlamp 10 further comprises a reception module intended to receive a reflected light beam. Once the light projected by the light guide 9 finds an object, a portion of this light is reflected and the reception module receives this reflected light and processes it. The emission module and the reception module can be arranged in the same front headlamp or at different locations on the vehicle, without departing from the scope of the present invention.

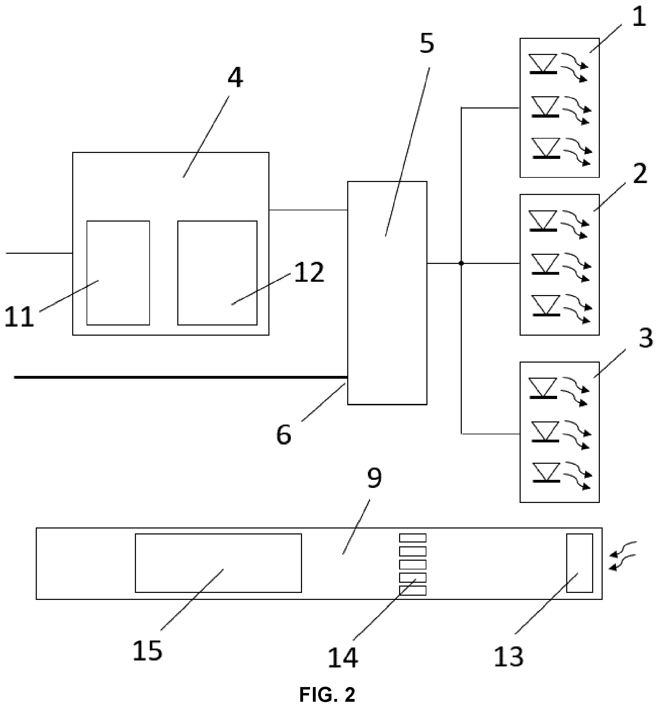

Figure 2 shows an electronic arrangement contained in this luminous device.

This electronic arrangement comprises
- a first group of LEDs 1 configured to perform the DRL;
- a second group of LEDs 2 configured to perform the front Position Light
- a third group of LEDs 3 configured to perform the Turn Indicator Light;
- a high frequency driver element 4 configured to produce a modulation control signal; and
- a distribution element 5, which in this case, is a multiplexer.

The high frequency driver 4 comprises a calculation unit 11 and a modulation unit 12. The calculation unit 11 generates a predetermined data sequence (e.g., a binary sequence composed of "0" and "1") and the modulation unit 12 modulates the first light beam emitted by the first group of light sources of the luminous device, based on the predetermined data sequence, by powering the first group of light sources. The first light beam thus emitted consists of a train of light pulses. The pulses follow one another at a high pulse frequency, for example greater than 10 MHz, corresponding to a minimum pulse duration lower than 100ns, at which the human eye can no longer distinguish them. Furthermore, the amplitude, width and/or position of each pulse with respect to the period enables the first light beam to transport the data sequence, such that a reflexion of the first light beam on an object transports the data sequence to the reception module.

The multiplexer 5 is configured to enable electric connection between the high frequency driver 4 and one of the groups of LEDs 1, 2, 3. To do so, the distribution element has a switch control input 6 and is configured to change the electric connection between the different groups of LEDs 1, 2, 3 as a function of the signal received in the switch control input 6.

The switch control input 6 may adopt four different values, for example 10, 01, 11 and 00. When the switch control input is 10, the multiplexer provides the output of the first group of LEDs, when the switch control input is 01, the multiplexer provides the output of the second group of LEDs, when the switch control input is 11, the multiplexer provides the output of the third group of LEDs and When the switch control input is 00, the multiplexer does not provide any output (disable).

This switch control input 6 is provided by the bus communication interface 7, such as a Controller Area Network (CAN) which is directly connected to the multiplexer or connected via the CAN connection of the driver.

The device further comprises a reception module 8 which comprises an optical unit 13, downstream of which a plurality of elementary acquisition units 14 are provided. The reception module also comprises a demodulation unit 15.

The high frequency driver comprises a calculation unit and a modulation unit.

The calculation unit generates a predetermined data sequence, for example, a pseudo-random binary sequence composed of "0" and "1", with a 50% duty cycle. In a second step, the modulation unit modulates the first light beam emitted by the first light source of the luminous device, based on this data sequence, by controlling the power supply to the first light source.

The modulation unit thus converts the data sequence into a modulating signal control signal. In other words, the first light beam thus emitted under the control of the modulated signal consists of a train of light pulses. The pulses follow one another at a sufficiently high variable frequency, for example greater than 1 MHz, or even greater than 10MHz, preferably between 50 MHz and 100 MHz ; at such high frequencies, the human eye can no longer distinguish pulses and perceive continuous ligthing. As such, a minimum duration of a pulse is respectively inferior to 1µS, or even inferior to 100ns, preferably comprised between 10ns and 20ns, Furthermore, the amplitude, width and/or position of each pulse with respect to the period enables the first light beam to transport the data sequence to the reception module.

The reception module comprises an optical unit, downstream of which a plurality of elementary acquisition units are provided. The reception module also comprises a demodulation unit.

Each of the elementary acquisition units comprises a photodetector and a common blue bandpass light filter arranged in front of the photodetector. The light beam received by the reception module is thus concentrated by the optical unit on one or more of the photodetectors, after passing through the common filter. This common bandpass filter is a blue light filter capable of letting through light rays whose wavelength is between 440 and 460 nm, the remainder being absorbed by this filter. In some particular cases, this filter is obtained by one high-pass filter and one low-pass filter.

Each filter thus makes it possible to minimise both the influence of the sun and the resulting component of the second light beam on the beam, by eliminating all the wavelengths of the beam with the exception of a range including the wavelength of the peak of the spectrum of the first emitted light beam. It should also be noted that the filter then makes it possible to retain only the component of the beam corresponding to the rays of light from the first group of light sources, the rays of yellow light being emitted by the second light source with a longer response time given the delay introduced by the photoluminescence. Therefore, insofar as detection is performed solely on the basis of the blue light received by the reception module, the resolution for evaluating the time of flight of the light beam and/or the data transmission rate between the emission module and the reception module is improved.

In a third step, each of the photodetectors converts the portion of the light beam which it receives into an electrical signal which it transmits to the demodulation unit, which can then extract a sequence of data, referred to as demodulated, in a fourth step.

Preferably, the demodulation unit counts, from the electrical signal, the number of photons detected by an elemental acquisition unit during a time interval corresponding to a pulse duration, then determine by thresholding with respect to a value determined from the peak power whether or not this quantity of photons corresponds to a pulse of the first light beam, and therefore to a bit of value "1" or to a bit of value "0". Alternatively, the demodulation unit quantizes a numbers of photons detected such that a number corresponding to photon detections is associated with each time interval. In both alternatives, a demodulated discrete data sequence is thus generated.

The demodulated discrete data sequence is thus transmitted to the calculation unit, which estimates, in a fifth step, values of a correlation function between the modulating sequence and the demodulated sequence. The calculation unit thus evaluates, for a plurality of time shift values, the value of the cross-correlation, by means of a cyclic convolution product, between the demodulated sequence and the modulating sequence delayed according to each of the time shift values.

In a sixth step, the calculation unit identifies this maximum value of the correlation function and estimates the value of this time of flight of the light beam between the object and the vehicle, associated with this maximum value. In a seventh step, the calculation unit estimates the distance d separating the object from the vehicle.

In these cases, the lightguide is a cylindrical lightguide formed by a single solid part, for example made of polymethyl methacrylate (PMMA) or polycarbonate (PC). This light guide has a coupling face, or input face, opposite which the first and second light sources and are arranged.

In an embodiment, the luminous device comprises three light sources of the first group, aligned along a diagonal of the coupling face, and two light sources of the second group, aligned along another diagonal of the coupling face crossing the first diagonal. Other arrangements of the first and second light sources and may be devised without departing from the scope of the present invention.

The main portion has a substantially circular cross-section and comprises, on part of its periphery, prisms defining, on an opposite part of the periphery of the main portion, an exit face of the light guide. These prisms form decoupling elements making it possible to reflect, by total internal reflection, light rays propagating in the guide towards the exit face, which is consequently a common exit surface for the light rays emitted by the first and second light sources.

## Claims

1. Luminous device (10) for an automotive vehicle, the luminous device comprising
- a first group of light sources (1), comprising at least one light source, the first group of light sources being configured to contribute to a first luminous function;
- a second group of light sources (2), comprising at least one light source, the second group of light sources being configured to contribute to a second luminous function;
- a high frequency driver element (4) configured to produce a modulation control signal modulated according to a predetermined data sequence, ;
- a distribution element (5), configured to enable electric connection between the high frequency driver and a group of light source selected among the groups of light sources, wherein the distribution element has a switch control input and is configured to change the electric connection between the groups of light sources as a function of the signal received in the switch control input;
- a control unit comprising a function selection input and a first output, the control unit being configured to emit a light group selection signal on the first output according to a signal received on the function selection input, the first output being connected to the switch control input of the switch element, such that the distribution element (5) selects the light group according to a signal received on the function selection input,
- the high frequency driver being configured to power the light sources of the selected group of light sources with the modulation control signal such that the selected groups of light sources emit a train of light pulses corresponding to the data sequence, at least one of the light pulses being shorter than 1µs, preferably shorter than 100ns,
- a projection optical element (9) configured to receive the light emitted by the groups of light sources and project the light outside the luminous device; and
- a reception module, the reception module comprising a reception optical unit, a plurality of acquisition units and a demodulation unit

2. Luminous device (10) according to claim 1, wherein the distribution element comprises a transistor, such as a Metal Oxide Semiconductor Field Effect Transistor or a Bipolar Junction Transistor.

3. Luminous device (10) according to claim 1, wherein the distribution element is a multiplexer.

4. Luminous device (10) according to claim 3, further comprising a third group of light sources, comprising at least one light source, the third group of light sources being configured to perform a third luminous function.

5. Luminous device (10) according to any of the preceding claims, wherein the light sources are light emitting diodes emitting incoherent light.

6. Luminous device (10) according to any of the preceding claims, wherein at least one of the light sources comprises an electroluminescent element with a dimension smaller than 300 micrometres.

7. Luminous device (10) according to any of the preceding claims, wherein each acquisition unit comprises a photodetector and the reception optical unit comprises a common bandpass filter arranged in front the photodetector, so that the reflected light enters the photodetector after passing through the bandpass filter.

8. Luminous device (10) according to any of the preceding claims, wherein the optical element is a lightguide.

9. Luminous device (10) according to any of the preceding claims, wherein the high frequency driver comprises an adjustment input and the control unit comprises a second output, the control unit being configured to emit an adjustment signal on its second output according to the function selection input, the adjustment input being connected to the second output the control unit, wherein the high frequency driver is configured to modify the power supplied to the LEDs, according to the adjustment signal received on the adjustment input, while powering them with the modulation signal

10. Luminous device (10) according to any of the preceding claims, wherein all the light sources are installed in a main electronic support.

11. Luminous device (10) according to any of the preceding claims, wherein the luminous functions are mutually exclusive.

12. Luminous device (10) according to any of the preceding claims, wherein the switch control input is connected to a bus communication interface, such as Local Interconnect Network or Controller Area Network or Clock Extension Peripheral Interface.
